# EUROPEAN PATENT APPLICATION

(11) **EP 1 313 314 A1**
(43) Date of publication of application: **21.05.2003**
(21) Application number: 01958390.5
(22) Date of filing: 22.08.2001
(51) Int. Cl.: H04N 5/76, H04N 5/91, G06F 3/12, G06T 1/00, G06T 11/80

(54) **IMAGE PRINTING DEVICE**

(30) Priority: 25.08.2000 JP 2000256295
(71) Applicant: Omron Corporation, Kyoto-shi, Kyoto 600-8530 (JP)
(72) Inventor: SHIKI, Naoto, Shimogyo-ku, Kyoto-shi, Kyoto 600-8530 (JP); INAGE, Katsuyuki, Shimogyo-ku, Kyoto-shi, Kyoto 600-8530 (JP); MAEDA, Tadasu, Shimogyo-ku, Kyoto-shi, Kyoto 600-8530 (JP); NISHIDAI, Hajime, Shimogyo-ku, Kyoto-shi, Kyoto 600-8530 (JP); FUNAKOSHI, Hiroshi, Shimogyo-ku, Kyoto-shi, Kyoto 600-8530 (JP)
(74) Representative: Calderbank, Thomas Roger
(86) International application number: JP0107175
(87) International publication number: WO02017629

(57) **Abstract**

The present invention relates to an image printing apparatus, devised such that numerous users can reliably and efficiently input editorial input. A first user utilizes operating panel 13-1, and a second user utilizes operating panel 13-2, respectively. Because an image photographed by CCD camera 15 is displayed on operating panel 13-1 and operating panel 13-2, each user selects an image he likes, and inputs image editing such as additional images by operating a control button displayed on the operating panel that he is using with a touch pen 14-1 or 14-2.

## Description

### TECHNICAL FIELD

The present invention relates to an image printing apparatus, and more particularly to an image printing apparatus constituted such that a plurality of users can share different image editing inputs and print images more enjoyably.

### BACKGROUND ART

In the past, an image printing apparatus (for example, Print Club (trademark)), which photographed an image of a user, and combined this [image] with a background image prepared in advance, printed it on stickers and outputted [these stickers], was well known.

For example, Japanese Patent Laid-open No. 2000-69404 proposes that an image printing apparatus like this be constituted so as to enable the use of an accessory pen to write characters and diagrams onto an image, which was photographed and is being displayed on a display portion. In this case, a user can write arbitrary characters and markings on a photographed image of himself and create a printed image.

However, a problem with the image printing apparatus disclosed in the above-mentioned official gazette was that, since there was one image display portion, it was difficult for many users to quickly check a photographed image.

Further, another problem was that, while a plurality of input pens for writing in arbitrary characters and markings on a touch panel were provided, since there was only one touch panel constituting the inputting portion, it was difficult for one user to write to an area adjacent to where another user was writing, and in the end, it was difficult for a plurality of users to enjoy writing lots of characters and graphics in a short period of time.

### DISCLOSURE OF THE INVENTION

The present invention was designed with the foregoing in view, and is constituted such that many users can input editorial input quickly and efficiently.

A first image printing apparatus of the present invention comprises: photographing means for photographing an object; first displaying means for displaying an image of said object photographed by said photographing means; accepting means for accepting editorial input inputted to said image displayed by said first displaying means; editing means for editing said image based on said editorial input accepted by said accepting means; and printing means for printing said image edited by said editing means, and is characterized in that said first displaying means is constituted by a plurality of display screens, and a plurality of said accepting means are provided corresponding to said plurality of display screens, respectively.

The above-mentioned plurality of display screens can be constituted so as to be juxtaposed.

The above-mentioned plurality of display screens can be constituted such that different types of information are displayed on them, respectively.

The present invention can be constituted such that a display for specifying said editorial input is displayed on each of said plurality of display screens, and the accepting means, of which a plurality are provided, accept each said editorial input based on the display for specifying said editorial input.

The present invention can be constituted such that an image selection screen is displayed on a first display screen, and an image selected on the selection screen is displayed on a second display screen of the above-mentioned plurality of display screens.

The present invention can be constituted so as to further comprise reflecting means for reflecting a first editorial input accepted by the one of a plurality of accepting means as a second editorial input accepted by the other accepting means, when an image displayed on a first display screen and an image displayed on a second display screen of the above-mentioned plurality of display screens are the same image.

The present invention can be constituted such that editing means edits a special image when an image displayed on a first display screen and an image displayed on a second display screen of the above-mentioned plurality of display screens are the same, and one of accepting means and the other accepting means simultaneously accept editorial inputs in a location corresponding to the image.

The present invention can be constituted such that editing means edits a special image when an image displayed on a first display screen and an image displayed on a second display screen of the above-mentioned plurality of display screens are the same image, and one of accepting means accepts editorial input in a location corresponding to a location in which editorial input has already been accepted from the other accepting means.

The present invention can be constituted so as to further comprise first storage means for storing an image displayed on a first display screen of the above-mentioned plurality of display screens, and second display means for storing an image displayed on a second display screen of the plurality of display screens.

The present invention can be constituted such that the above-mentioned printing means prints an image stored by either first or second storage means to a printing medium.

The present invention can be constituted so as to further comprise first sound generating means for generating a sound corresponding to a display of a first display screen of the above-mentioned plurality of display screens, and second sound generating means for generating a sound corresponding to a display of a second display screen of the plurality of display screens, and first sound generating means and second sound generating means generate respectively different sounds.

The present invention can be constituted so as to further comprise second displaying means for displaying said object image photographed by said photographing means in the vicinity of said photographing means.

The present invention can be constituted so as to further comprise stairs consisting of one or more steps of substantially the same width as said printing image apparatus, and positioned in a range where said photographing means is capable of photographing.

A first image printing method of the present invention comprises a photographing step for photographing an object; a displaying step for displaying an image of said object photographed by the processing of said photographing step; an accepting step for accepting editorial input inputted relative to said image displayed by the processing of said displaying step; an editing step for editing said image based on said editorial input accepted by the processing of said accepting step; and a printing step for printing said image edited by the processing of said editing step, and is characterized in that the display by the processing of said displaying step is carried out on a plurality of display screens, and the acceptance by the processing of said accepting step is executed corresponding to said plurality of display screens, respectively.

A printing medium of the present invention comprises: a photographing step for photographing an object; a displaying step for displaying an image of said object photographed by the processing of said photographing step; an accepting step for accepting editorial input inputted relative to said image displayed by the processing of said displaying step; an editing step for editing said image based on said editorial input accepted by the processing of said accepting step; and a printing step for printing said image edited by the processing of said editing step, and is characterized in that the display by the processing of said displaying step is carried out on a plurality of display screens, and the acceptance by the processing of said accepting step is executed corresponding to said plurality of display screens, respectively.

A first computer program of the present invention comprises: a photographing controlling step for controlling the photographing of an object; a display controlling step for controlling the display of an image of said object, the photographing of which is controlled by the processing of said photographing controlling step; an acceptance controlling step for controlling the acceptance of editorial input inputted relative to said image, the display of which is controlled by the processing of said display controlling step; an editing step for editing said image based on said editorial input, the acceptance of which is controlled by the processing of said acceptance controlling step; and a print controlling step for controlling the printing of said image edited by the processing of said editing step, and is characterized in that, in the processing of said display controlling step, the display of an image of said object on a plurality of display screens is controlled, and the acceptance by the processing of said accepting step is executed corresponding to said plurality of display screens, respectively.

A printing medium preparation system of the present invention comprises: photographing means for photographing an object; displaying means for displaying on a plurality of display screens an image of said object photographed by said photographing means; accepting means for accepting editorial input inputted relative to said image displayed on said plurality of display screens, respectively, by said displaying means; editing means for editing said image displayed on said plurality of display screens, based on said editorial input accepted by said accepting means; printing means for printing on a predetermined printing medium said image displayed on said plurality of display screens edited by said editing means; and ejection means for ejecting said printing medium on which said image displayed on said plurality of display screens has been printed by said printing means.

A printing medium preparation method of the present invention comprises: a photographing step for photographing an object; a displaying step for displaying on a plurality of display screens an image of said object photographed by the processing of said photographing step; an accepting step for accepting editorial input inputted relative to said image displayed on said plurality of display screens, respectively, by the processing of said displaying step; an editing step for editing said image displayed on said plurality of display screens, based on said editorial input accepted by the processing of said accepting step; a printing step for printing on a predetermined printing medium said image displayed on said plurality of display screens edited by the processing of said editing step; and an ejecting step for ejecting said printing medium on which said image displayed on said plurality of display screens has been printed by the processing of said printing step.

A second computer program of the present invention has a computer to execute: a photographing controlling step for controlling the photographing of an object; a display controlling step for controlling the display on a plurality of display screens of an image of said object, the photographing of which is controlled by the processing of said photographing controlling step; an accepting step for accepting editorial input inputted relative to said image, the displaying of which on said plurality of display screens, respectively, is controlled by the processing of said display controlling step; an editing step for editing said image displayed on said plurality of display screens, based on said editorial input accepted by the processing of said accepting step; a print controlling step for controlling the printing on a predetermined printing medium of said image displayed on said plurality of display screens edited by the processing of said editing step; and an ejection controlling step for controlling the ejection of said printing medium on which the printing of said image displayed on said plurality of display screens is controlled by the processing of said print controlling step.

A second image printing apparatus of the present invention comprises: photographing means for photographing an object; displaying means for displaying an image of said object photographed by said photographing means; accepting means for accepting editorial input inputted relative to said image displayed by said displaying means; editing means for editing said image based on said editorial input accepted by said accepting means; printing means for printing said image edited by said editing means; setting means for setting the editable area of said image to be edited by said editing means; and determining means for determining whether or not editorial input has been inputted in the editable area of said image, and is characterized in that said editing means edits said image based on said editorial input when it has been determined by said determining means that said editorial input has been inputted in said editable area.

The above-mentioned setting means can be constituted so as to set as said editable area an area, in which the value of pixels constituting said image correspond to pixels, which are darker than a predetermined threshold value set beforehand.

The present invention can be constituted such that said displaying means has a plurality of display screens, and said accepting means has: a first accepting means corresponding to a first display screen of said plurality of display screens; and a second accepting means corresponding to a second display screen of said plurality of display screens; and said setting means has: a first setting means for setting a first said editable area corresponding to said first display screen; and a second setting means for setting a second said editable area corresponding to said second display screen.

The present invention can be constituted so as to further comprise a plurality of selecting means for selecting the percentage of editable area for each of the above-mentioned plurality of display screens.

The present invention can be constituted such that a first editable area set by a first setting means is displayed on the above-mentioned first display screen, and a second editable area set by a second setting means is displayed on a second display screen.

The present invention can be constituted so as to further comprise reflecting means for reflecting editorial input according to a first accepting means on a second display screen, and for reflecting editorial input according to a second accepting means on a first display screen, when images displayed on the above-mentioned first display screen and second display screen are the same image.

The present invention can be constituted such that at the least when said image displayed on said first display screen is the same as the image displayed on the second display screen, said reflecting means prohibits first said editable area from being reflected on said second display screen, and prohibits second said editable area from being reflected on said first display screen.

A second image printing method of the present invention comprises: a photographing step for photographing an object; a displaying step for displaying an image of said object photographed by the processing of said photographing step; an accepting step for accepting editorial input inputted relative to said image displayed by the processing of said displaying step; an editing step for editing said image based on said editorial input accepted by the processing of said accepting step; a printing step for printing said image edited by the processing of said editing step; a setting step for setting an editable area for said image edited by the processing of said editing step; and a determining step for determining whether or not editorial input has been inputted in said editable area of said image, and is characterized in that, in the processing of said editing step, said image is edited based on said editorial input, when it has been determined by the processing of said determining step that said editorial input has been inputted in said editable area.

A third computer program of the present invention comprises: a photographing controlling step for controlling the photographing of an object; a display controlling step for controlling the display of an image of said object, the photographing of which is controlled by the processing of said photographing controlling step; an accepting step for accepting editorial input inputted relative to said image, the display of which is controlled by the processing of said display controlling step; an editing step for editing said image based on said editorial input accepted by the processing of said accepting step; a print controlling step for controlling the printing of said image edited by the processing of said editing step; a setting step for setting an editable area for said image edited by said editing step; and a determining step for determining whether or not editorial input has been inputted in said editable area of said image, and is characterized in that, in the processing of said editing step, said image is edited based on said editorial input, when it has been determined by the processing of said determining step that said editorial input has been inputted in said editable area.

In a first image printing apparatus and image printing method of the present invention, as well as the computer program therefor, an object is photographed, an image of the photographed object is displayed, and editorial input inputted relative to the displayed image is accepted. Further, the image is edited based on accepted editorial input, and the edited image is printed. Then, the photographed image is displayed on a plurality of provided display screens, and editing is inputted for each image displayed, respectively.

In accordance therewith, numerous users can check a photographed image quickly and reliably. Further, a plurality of users can perform editing at the same time.

In the printing medium preparation system and method of the present invention, as well as the computer program therefor, an object is photographed, an image of the photographed object is displayed on a plurality of display screens, and the image is edited based on accepted editorial input for the respective images displayed on the plurality of display screens. The edited images displayed on the plurality of display screens are printed.

In accordance therewith, numerous users can print edited photographed images quickly and reliably in a short period of time.

In a second image printing apparatus and method of the present invention, as well as the computer program therefor, an object is photographed, an image of the photographed object is displayed, editorial input inputted relative to the displayed image is accepted, the image is edited based on the accepted editorial input, the edited image is printed, the editable area of the edited image is set, a determination is made as to whether or not editorial input has been performed in the editable area of the image, and when it is determined that editorial input has been performed in the editable area, the image is edited on the basis of the editorial input.

In accordance therewith, when inputting doodling for a photographed image, for example, it is possible to prevent the doodling from overlapping with the face of the user.

### BRIEF DESCRIPTION OF THE DRAWINGS

Fig. 1 is a diagram showing an example of a constitution of the exterior of an image printing apparatus to which the present invention has been applied;
Fig. 2 is a block diagram showing an example of the electrical constitution of the inside of an image printing apparatus;
Fig. 3 is a flowchart for explaining the printing process of an image printing apparatus;
Fig. 4 is a continuation of the flowchart in Fig. 3 for explaining the printing process of an image printing apparatus;
Figs. 5A and 5B are diagrams showing examples of demonstration screen displays;
Figs. 6A, 6B and 6C are diagrams showing examples of explanatory screen displays;
Figs. 7A and 7B are diagrams showing examples of captured images;
Figs. 8A and 8B are diagrams showing examples of screens for taking a photograph;
Figs. 9A and 9B are diagrams showing examples of screens for selecting a photograph to be printed;
Figs. 10A and 10B are diagrams showing examples of brightness adjustment screens;
Figs. 11A and 11B are diagrams showing examples of screens for doodling;
Figs. 12A and 12B are diagrams showing examples of screens for selecting the number of partitions [per sheet];
Figs. 13A and 13B are diagrams showing examples of guidance screens;
Fig. 14 is a flowchart for explaining a reflecting process of an image printing apparatus;
Fig. 15 is the continuation of the flowchart in Fig. 14 for explaining a reflecting process of an image printing apparatus;
Figs. 16A and 16B are diagrams showing examples of other doodling screens;
Figs. 17A and 17B are diagrams showing examples of yet other doodling screens;
Fig. 18 is a flowchart for explaining the process for limiting the scope of doodling of an image printing apparatus;
Fig. 19 is a diagram showing an example of a display of a menu for selecting a doodling area;
Figs. 20A and 20B are diagrams illustrating examples of frame buffers; and
Figs. 21A and 21B are diagrams showing examples of doodling area displays.

### BEST MODE FOR CARRYING OUT THE INVENTION

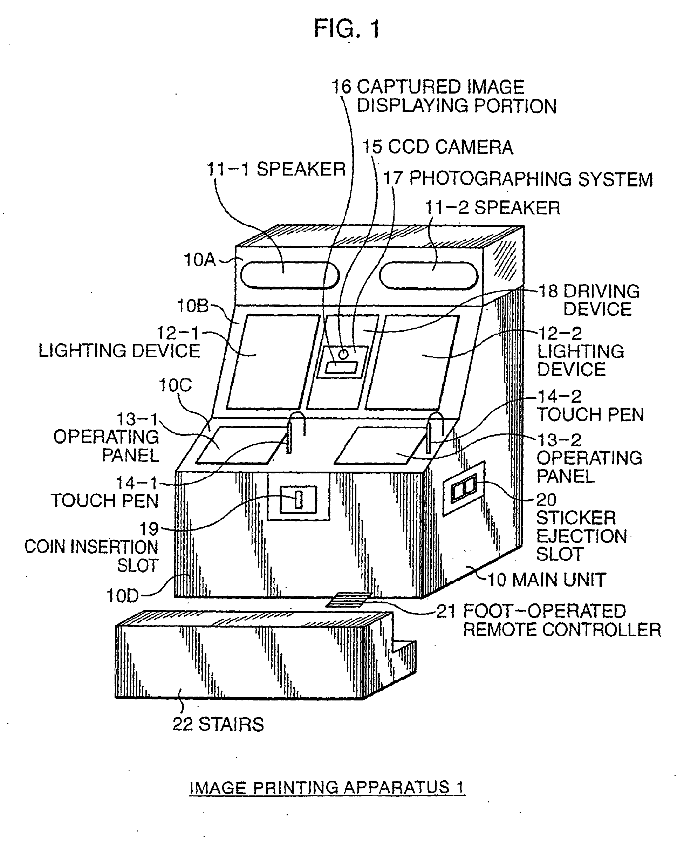

Fig. 1 shows the constitution of the exterior of an image printing apparatus to which the present invention has been applied. On the left and right of the front surface of the main unit 10 of an image printing apparatus 1, there are disposed from top to bottom a speaker 11-1 and a speaker 11-2, a lighting device 12-1 and a lighting device 12-2, an operating panel 13-1 and an operating panel 13-2, and a touch pen 14-1 and a touch pen 14-2 for inputting editorial graphics and characters to an image displayed on operating panel 13-1 and operating panel 13-2, respectively. Furthermore, hereinbelow, when it is not necessary to distinguish individually between speaker 11-1 and speaker 11-2, respectively, they will be referred to collectively as speaker 11, when it is not necessary to distinguish individually between lighting device 12-1 and lighting device 12-2, respectively, they will be referred to collectively as lighting device 12, when it is not necessary to distinguish individually between operating panel 13-1 and operating panel 13-2, respectively, they will be referred to collectively as operating panel 13, and when it is not necessary to distinguish individually between touch pen 14-1 and touch pen 14-2, respectively, they will be referred to collectively as touch pen 14.

Speaker 11, which is arranged on a nearly vertical surface 10A of main unit 10, outputs voice guidance for guiding a user through the photographing procedure after coins have been inserted, and voice guidance when a user is performing the hereinbelow-explained editing on a photographed image of himself displayed on operating panel 13.

Lighting device 12, which is arranged on a nearly vertical (slightly upward-facing) surface 10B of main unit 10, functions as a flash when taking a photograph, and, in addition, since outside light is shut out by a background curtain not shown in the figure, which surrounds main unit 10 and a user, [lighting device 12] also illuminates a user even in the state prior to taking a photograph.

A CCD (Charge Coupled Device) camera 15 for photographing a user is disposed between lighting device 12-1 and lighting device 12-2, and a captured image, which CCD camera 15 is photographing, is displayed in a photographed image displaying portion 16 disposed beneath CCD camera 15. The photographing system 17 is constituted by CCD camera 15 and captured image displaying portion 16, and a user can move photographing system 17 in the up-down directions within the drivable range of a driving device 18 by operating a foot-operated remote controller 21 (hereinafter referred to as a foot controller 21).

Operating panel 13, which is arranged on a nearly horizontal (slightly upward sloping) surface 10C of main unit 10, is constituted from monitors, constituted from either liquid crystal displays or CRT (Cathode-Ray Tubes), and touch panels overlaid on the upper portions thereof. Touch pen 14 is disposed in the vicinity of operating panel 13, respectively, and since an image photographed by CCD camera 15 is displayed on operating panel 13, a user can use a touch pen 14 to carry out the hereinbelow-described doodling on a photographed image. Further, in addition to a photographed image, a variety of selection buttons corresponding to the preparation of an image printout and the stages of progress of print processing, and messages and the like are also displayed on operating panel 13, and the photographing procedure proceeds forward by a user utilizing a touch pen 14 to select a selection button displayed on operating panel 13.

Touch pen 14-1 is disposed in the vicinity of operating panel 13-1, and touch pen 14-2 is disposed in the vicinity of operating panel 13-2, respectively, and two users can simultaneously input doodling to photographed images displayed on operating panel 13-1 and operating panel 13-2, respectively. Furthermore, different photographed images can be displayed respectively on operating panel 13-1 and operating panel 13-2, and a user can also input doodling to the different photographed images.

A coin insertion slot 19 is disposed on a nearly vertical surface 10D of main unit 10 below operating panel 13. When a user inserts a predetermined [amount of] money into coin insertion slot 19, a photographing procedure is started.

A sticker ejection slot 20 is disposed on the right-side surface of main unit 10, and a photographed image, which has been photographed and edited, is printed on a [sheet of] stickers, which has been partitioned into a predetermined number, and ejected.

A two-step stairs 22 of practically the same width as the width of main unit 10 is installed in front of main unit 10. When photographing, a user can utilize the stairs 22 to photograph himself in a variety of poses. The number of steps of stairs 22 can also be set to one step, or three or more steps.

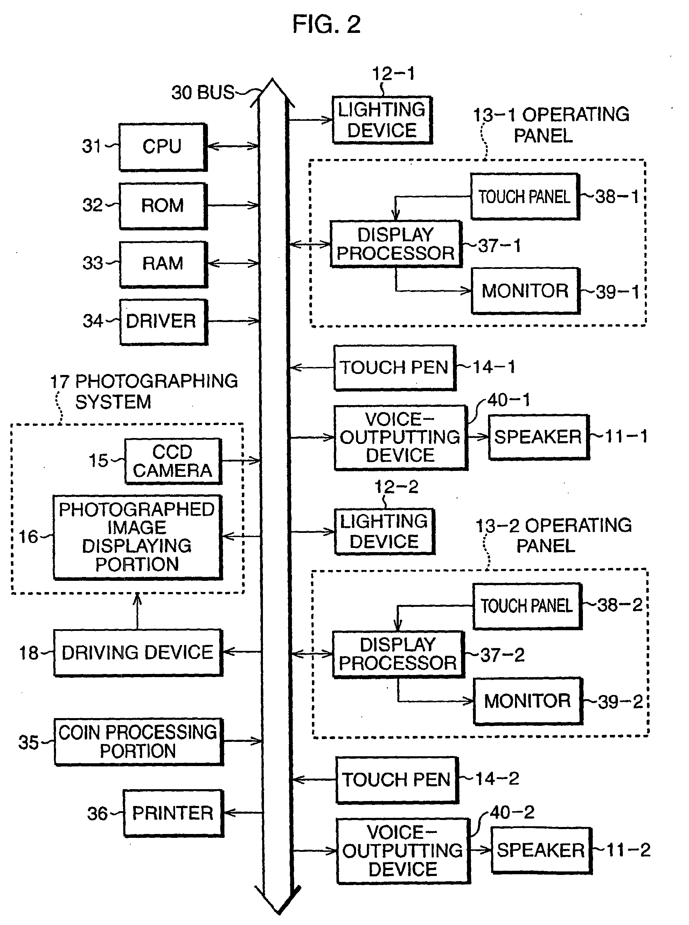

Fig. 2 is a block diagram showing an example of an electrical constitution of the inside of image printing apparatus 1. Furthermore, the same reference numerals are assigned to parts that correspond to Fig. 1.

A CPU (Central Processing Unit) 31 controls overall operation and processing in accordance with a program stored in ROM (Read Only Memory) 32. That is, each processing portion is connected to, and controlled by CPU 31 via a bus 30.

RAM (Random Access Memory) 33 stores the working data of CPU 31, and, in addition, temporarily stores the selections, instructions and so forth, which a user performs in each processing portion.

A driver 34 drives a recording medium, such as a CD-ROM (Compact Disk-Read Only Memory) not shown in the figure, and reads out recorded data. Programs for performing a variety of processing, such as photographing and doodling, are recorded on a CD-ROM or other such recording medium, and at execution time, these programs are sent to RAM 33 and executed. Further, voice guidance data is recorded on CD-ROM, and a voice-outputting device 40-1, based on a command from CPU 31, reads out guidance data recorded on CD-ROM and outputs [same] to speaker 11-1. The guidance, which speaker 11-1 outputs to a user, comprises operating methods, a countdown just prior to a photograph being taken, and so forth. The same processing as the output processing of speaker 11-1 is executed on speaker 11-2 as well, and voice guidance is outputted in accordance with input from the main operating panel 13-1. Furthermore, voice-outputting device 40-1 and voice-outputting device 40-2 can also be constituted so as to output different voice guidance corresponding to inputs from operating panel 13-1 and operating panel 13-2, respectively.

A coin-processing portion 35 detects the sum of coins inserted via coin insertion slot 19, and when a determination is made that the predetermined amount of money has been inserted, notifies CPU 31 to that effect.

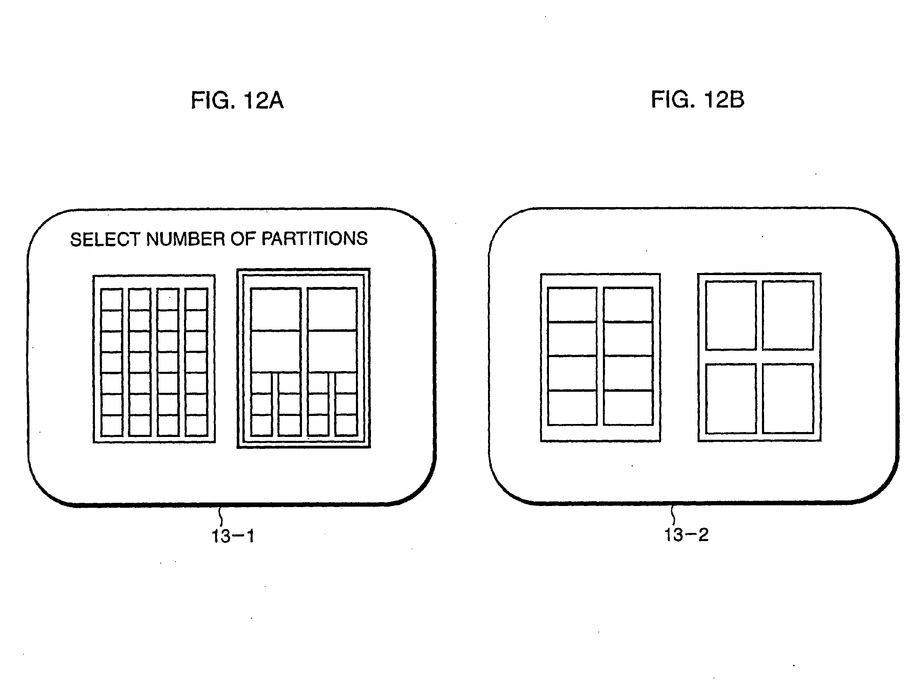

Printer 36 is the part, which prepares the image stickers, and prints an image after it has been photographed by CCD camera 15 and objected to the hereinbelow-described doodling and the like (the image, which has been determined as the one to be printed, hereinafter referred to as the print image) onto a sheet of stickers, and outputs [same]. Printer 36 prints a user-selected print image onto a sheet of stickers so they can be peeled off in specified partitioned units (refer to Figs. 12A and 12B, which will be explained hereinbelow). Furthermore, a user can select and print several kinds of print images on a single sheet of stickers.

A display processor 37-1, based on a command from CPU 31, displays on a monitor 39-1 a guidance screen of photographing procedures. Display processor 37-1 has a frame buffer for internally storing a photographed image of CCD camera 15. A frame buffer is constituted by a dual port memory, which is capable of storing at the least two images, and is utilized by being divided into two regions, each region of which is capable of storing one photographed image. A captured image from CCD camera 15 is inputted into the first region of the frame buffer, and after taking a photograph, the photographed image (when a user selects frame image, a photographed image and a frame image) is stored [in the first region of the frame buffer].

Meanwhile, the second region is a storage area, which is used in doodling or brightness adjustment and other such editing processes, and when photographing is complete, the same photographed image as that of the first region is stored [in the second region]. That is, in an editing process, when a user inputs a doodle using touch pen 14-1, this inputted data is written inside the second region. Furthermore, a user can delete a doodle that has been added and return to the original image by specifying an eraser process. In this case, display processor 37-1 reads out from the first region image data of the part specified by this eraser, and writes [this image data] to the second region, thereby returning the part that the user specified by eraser to the photographed image of prior to doodling being performed.

Operating panel 13-1 is constituted by a transparent touch panel 38-1 being overlaid on monitor 39-1, and data stored in the second region of the above-described frame buffer of display processor 37-1 is displayed on monitor 39-1. Therefore, as a user is inputting additional images and the like, the photographed image on which the additional images are put is displayed on monitor 39-1.

Touch panel 38-1 detects input from touch pen 14-1. That is, a user utilizes touch pen 14-1 to select a selection button displayed on monitor 39-1, and to form additional images on a photographed image displayed on monitor 39-1. Data inputted by touch pen 14-1 is detected by touch panel 38-1 and is written to the second region of the frame buffer of display processor 37-1 as input data.

Since the constitutions of display processor 37-2, touch panel 38-2 and monitor 39-2 are the same constitutions as display processor 37-1, touch panel 38-1 and monitor 39-1, respectively, explanations of these constitutions will be omitted. Hereinbelow, when it is not necessary to distinguish individually between display processor 37-1 and display processor 37-2, respectively, they will be referred to collectively as display processor 37, when it is not necessary to distinguish individually between touch panel 38-1 and touch panel 38-2, respectively, they will be referred to collectively as touch panel 38, and when it is not necessary to distinguish individually between monitor 39-1 and monitor 39-2, respectively, they will be referred to collectively as monitor 39.

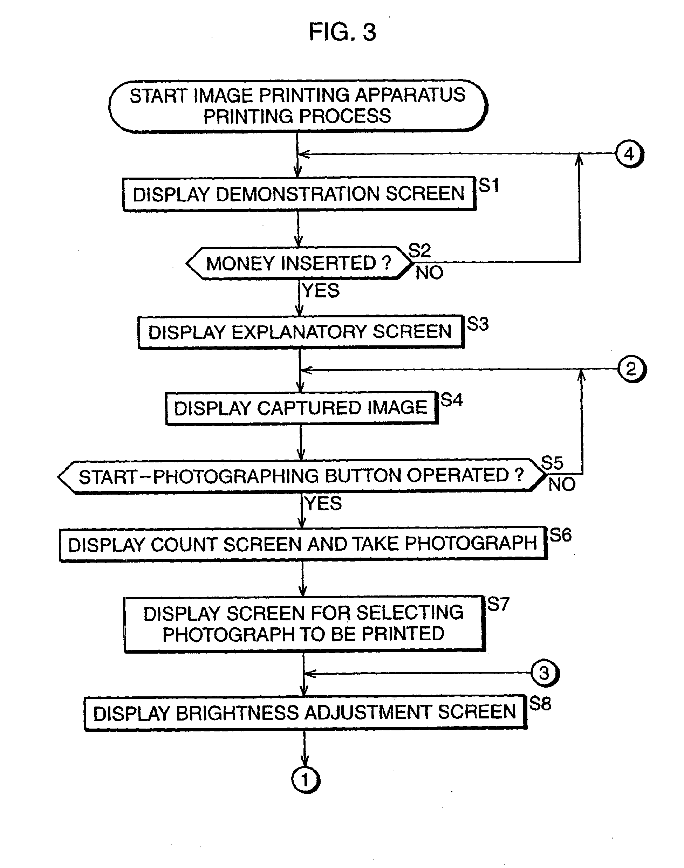

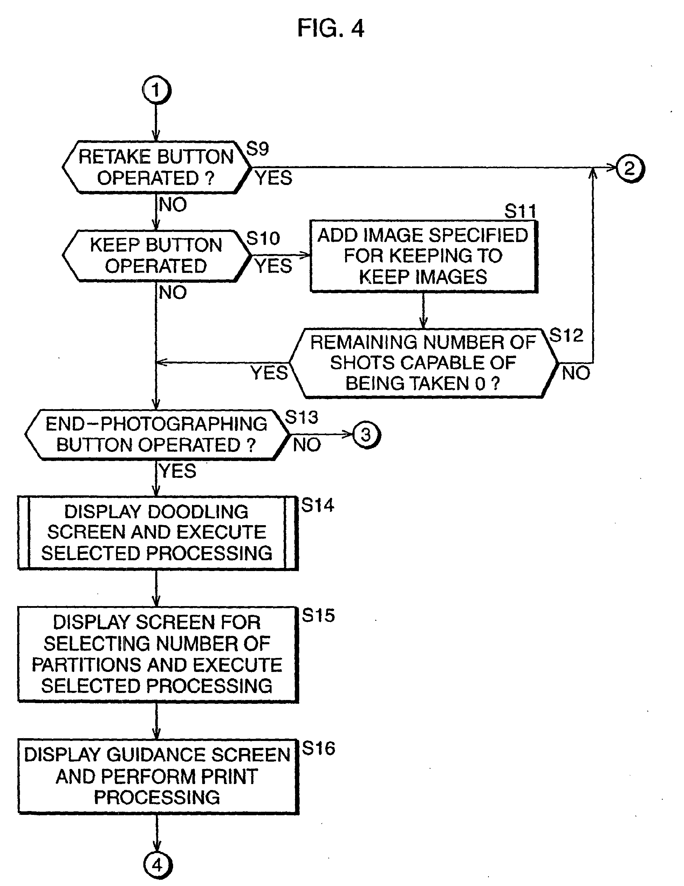

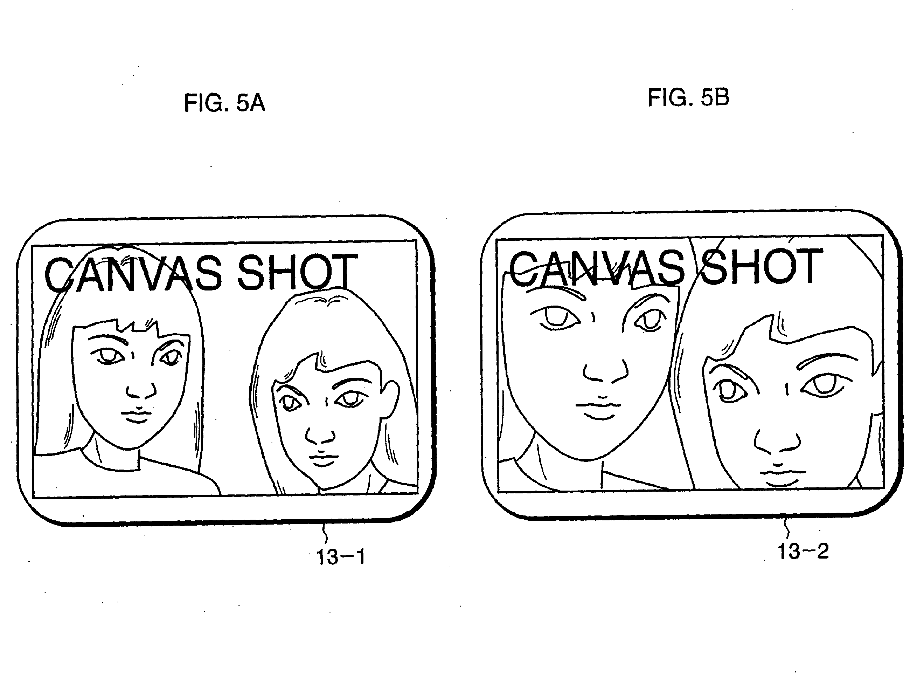

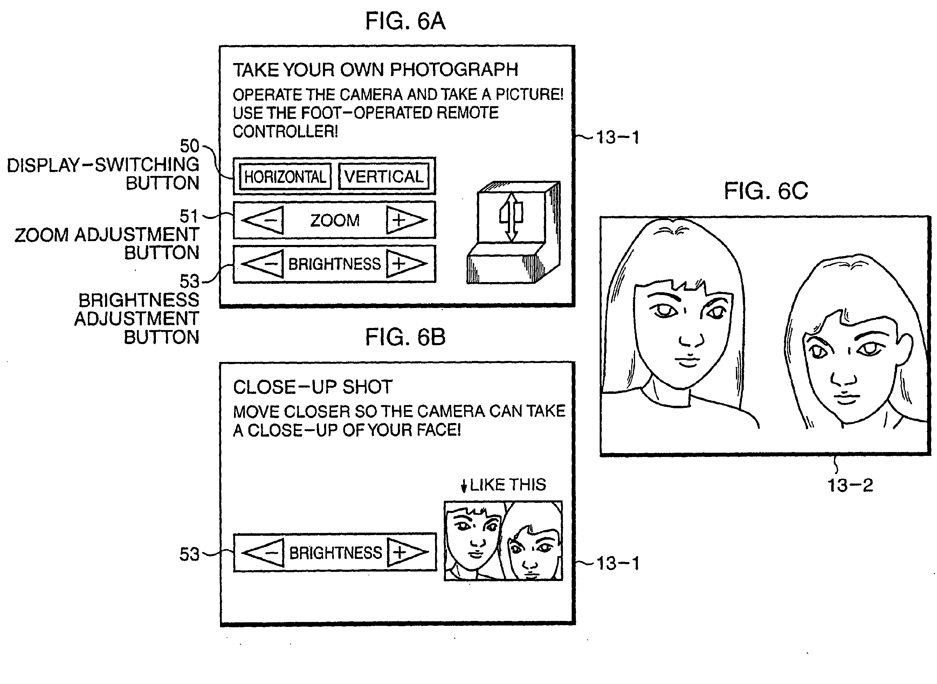

Next, the printing process of image printing apparatus 1 will be explained by referring to the flowcharts of Fig. 3 and Fig. 4. Further, when explaining each step of the process, reference will be made as necessary to the examples of displays of operating panel 13 shown in Fig. 5A through Fig. 13B. Furthermore, Fig. 5A shown on the left side, for example, will be regarded as an example of a display of operating panel 13-1, and Fig. 5B shown on the right side, for example, will be regarded as an example of a display of operating panel 13-2. In the display examples of Fig. 6A through Fig. 13B as well, [the constitution] will be regarded the same as the constitution of Figs. 5A and 5B. Further, when explaining the various buttons shown in the figures, the same reference numeral will be assigned to buttons having the same functions, and, for the sake of brevity, iterative explanations will be omitted.

In Step S1, display processor 37 displays a demonstration screen on operating panel 13 on the basis of a command from CPU 31. The demonstration screen shown in Fig. 5A, for example, is displayed on monitor 39-1 of operating panel 13-1, and the demonstration screen shown in Fig. 5B, for example, is displayed on monitor 39-2 of operating panel 13-2. The demonstration screen data is read in from CD-ROM by driver 34, which is not shown in the figure, and is sent to display processor 37 via bus 30.

In Step S2, CPU 31 determines whether or not money has been inserted based on a notification from coin processing portion 35. CPU 31 instructs display processor 37 to display a demonstration screen (Figs. 5A and 5B) until it has been determined that money has been inserted into coin insertion slot 19, and when it is determined that money has been inserted, processing proceeds to Step S3.

In Step S3, display processor 37, based on a command from CPU 31, displays a screen explaining the photographing procedure on operating panel 13. Operating panel 13-2, which is shown in Fig. 6C, displays a captured image that CCD camera 15 photographed in real-time, and screens explaining the method for setting a CCD camera 15-captured image, which is displayed on operating panel 13-2, are displayed on operating panel 13-1 shown in Fig. 6A and Fig. 6B.

In the example display of Fig. 6A, there are displayed a display-switching button 50 for either displaying a captured image horizontally or displaying it vertically; a zoom adjustment button 51 for adjusting the zoom function of CCD camera 15; and a brightness adjustment button 53 for adjusting the amount of light that CCD camera 15 captures. Further, the fact that the photographing system 17 comprising CCD camera 15 can be moved in the up-down directions by operating foot controller 21 is displayed. A user, in accordance with this explanatory screen, operates the above-mentioned buttons displayed on operating panel 13-1 by using touch pen 14-1, and sets a captured image. In Fig. 6B, there are displayed a demonstration screen explaining close-up photographs, and brightness adjustment button 53 for adjusting the brightness thereof.

A captured image photographed (captured) by CCD camera 15 is sent to display processor 37 via bus 30, and, in addition, is sent to and displayed on captured image displaying portion 16. That is, a dynamic image is displayed here. Further, in addition to the explanatory screens shown in Fig. 6A and Fig. 6B, voice-outputting device 40 outputs voice guidance from speaker 11.

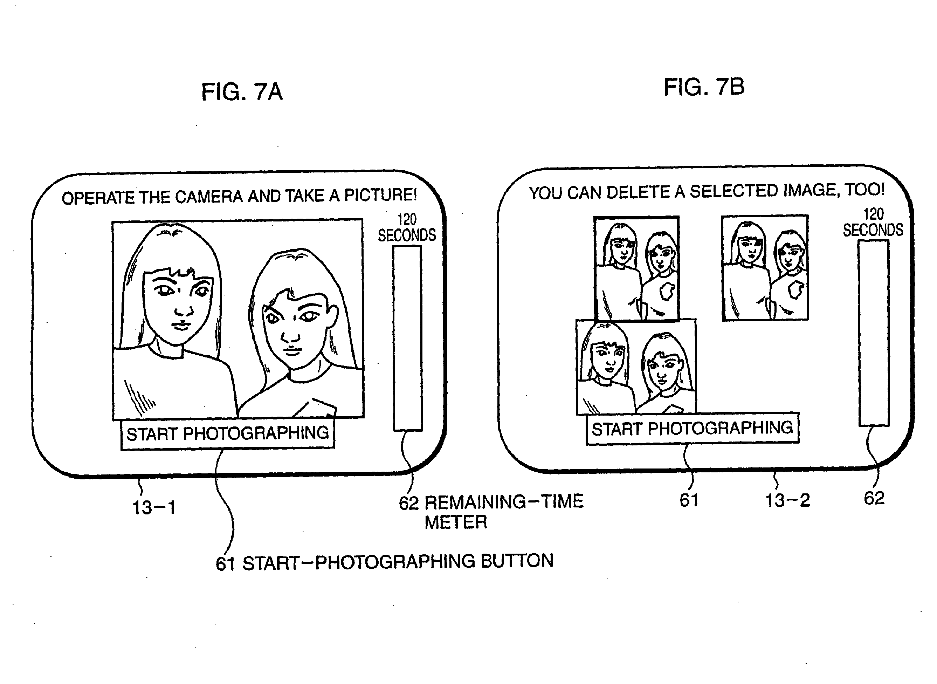

In Step S4, display processor 37 displays a captured image on operating panel 13 based on a command from CPU 31. A captured image, which CCD camera 15 is photographing, is displayed on operating panel 13-1 as shown in Fig. 7A, for example. When a user selects an image to be kept (a keep image) from among already taken photographed images by operating a keep button, which will be explained hereinbelow, the keep image is displayed on operating panel 13-2 as shown in Fig. 7B. Furthermore, since a user can print a maximum of four kinds of photographed images on one sticker sheet, a maximum of four kinds of images can be kept.

A user can delete an already photographed image by using touch pen 14-2 to specify a photographed image being displayed on operating panel 13-2. Further, a start-photographing button 61 is displayed on operating panel 13-1 and operating panel 13-2, respectively, and, in addition, a remaining-time meter 62, which indicates the amount of time remaining until a photograph is taken, is displayed [on operating panel 13-1 and operating panel 13-2, respectively].

In Step S5, CPU 31 determines whether or not start-photographing button 61 has been operated based on a notification for touch panel 38. CPU 31 causes a captured image to be displayed and waits until it is determined that start-photographing button 61 has been operated, and when it is determined from the input of either touch panel 38 that start-photographing button 61 has been operated, processing proceeds to Step S6.

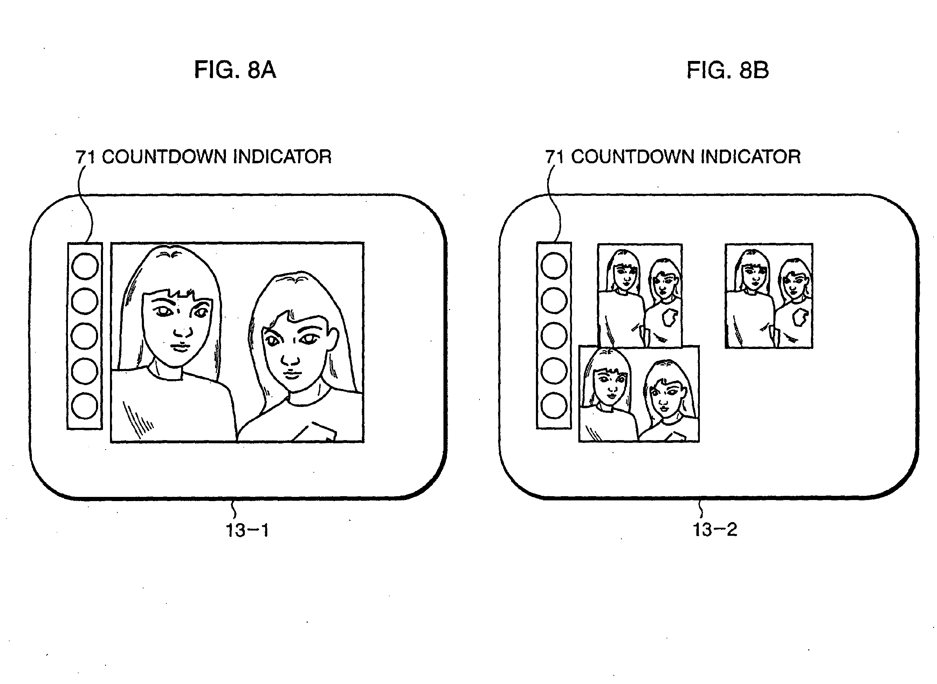

In Step S6, display processor 37 displays a countdown screen prior to photographing. A countdown screen like that of Fig. 8A, for example, is displayed on operating panel 13-1. Display processor 37-1, based on commands from CPU 31, commences lighting from the topmost display of countdown indicator 71 displayed on the left side of the screen. CCD camera 15 executes photographing when the bottommost display of countdown indicator 71 lights up. As shown in Fig. 8B, countdown indicator 71 is also displayed on operating panel 13-2, and display processor 37-2 lights up [this indicator] in the same manner as the processing of display processor 37-1. Further, in addition to the lighting of countdown indicator 71, voice-outputting device 40 outputs a countdown by voice guidance from speaker 11.

Further, a captured image of CCD camera 15 is also displayed in the photographed image displaying portion 16 disposed beneath CCD camera 15. In accordance therewith, a user can take photographs by matching his line of sight to CCD camera 15 without directing his line of sight toward operating panel 13.

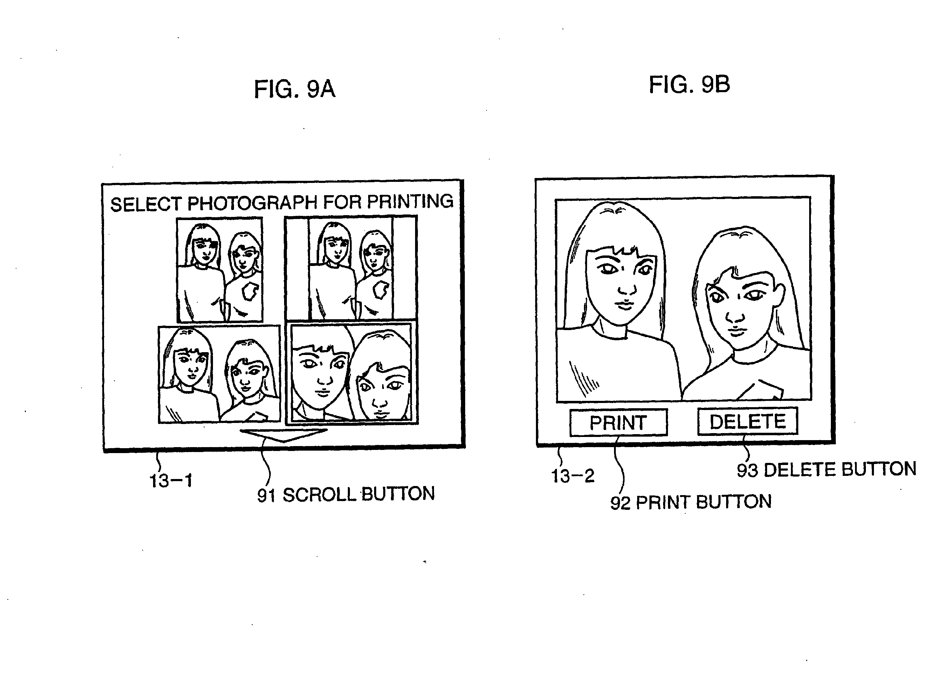

In Step S7, based on a command from CPU 31, display processor 37 displays on operating panel 13 a screen for selecting a photograph to be printed. Of the photographed images photographed thus far, images for printing (to be kept) are displayed for selection on operating panel 13-1 as shown in Fig. 9A, and a user moves a cursor with touch pen 14-1 and selects a keep image (an image to be printed). Further, an image, which was selected from the photographed images being displayed on operating panel 13-1, is enlarged and displayed on operating panel 13-2 as shown in Fig. 9B. A user can select either to operate a print button 92 displayed on operating panel 13-2 to print (keep) a photographed image, or to delete a photographed image by operating a delete button 93. When CPU 31, based on a notification from touch panel 38-2, determines that a user has operated print button 92, processing proceeds to Step S8.

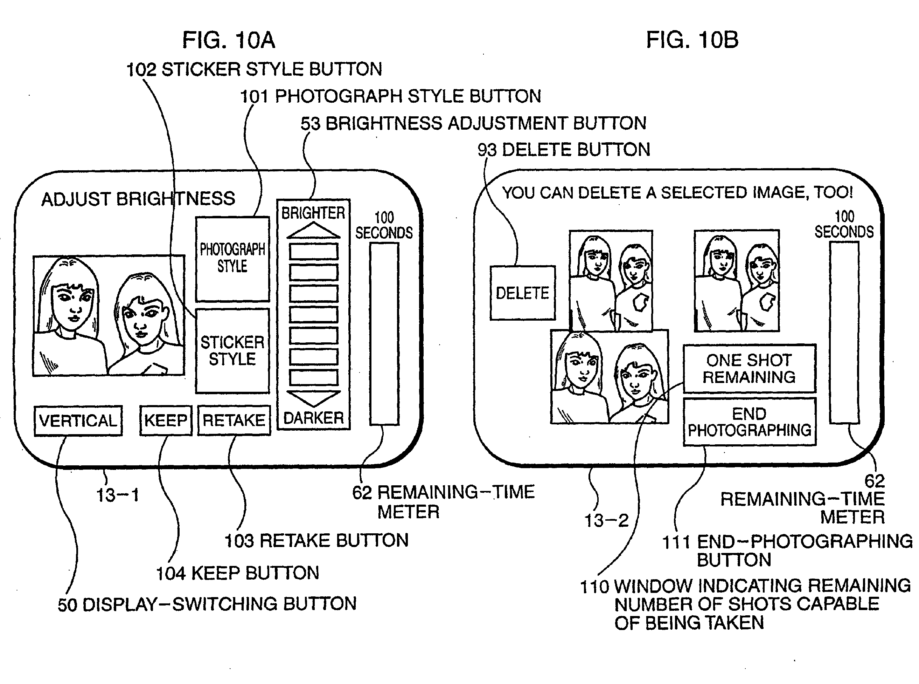

In Step S8, based on a command from CPU 31, display processor 37 displays a screen for adjusting brightness on operating panel 13. As shown in Fig. 10A, a photographed image for which printing was selected in the process of Step S7 is displayed on operating panel 13-1, and a brightness adjustment button 53 operated when adjusting the brightness of this image, a photograph style button 101 operated when printing on photographic paper without processing on stickers, a sticker style button 102 operated when printing on a sticker sheet, display-switching button 50 operated when changing a keep image displayed in the horizontal direction so as to be displayed in the vertical direction, a retake button 103 operated when deleting an image that is being displayed and once again taking a photograph, and a keep button 104 operated when saving an image to be edited are displayed.

As shown in Fig. 10B, a keep image, which has been selected as the image to be edited, is displayed on operating panel 13-2 by a user operating keep button 104. In the example display of Fig. 10B, since three images have already been selected as keep images, "one shot remaining" is displayed in a window 110 [for indicating] the remaining number [of shots] capable of being taken. Further, delete button 93 is displayed on operating panel 13-2, and a user can operate this [button] to delete an image selected for keeping. Furthermore, an end-photographing button 111 is displayed on operating panel 13-2, enabling a user to proceed to the next [step] even before selecting four keep images. The time limit for brightness adjustment is displayed in remaining-time meter 62 on operating panel 13-1 and operating panel 13-2.

In Step S9, CPU 31 determines whether or not the retake button 103 on the brightness adjustment screen (Fig. 10A) has been operated. When CPU 31 determines on the basis of a notification from touch panel 38-1 that retake button 103 has been operated, it returns to Step S4, and repeats execution of processing subsequent thereto.

In Step S9, when CPU 31 determines that the retake button 103 on the brightness adjustment screen (Fig. 10A) has not been operated, it proceeds to the processing of Step S10.

In Step S10, CPU 31 determines whether or not keep button 104 on the brightness adjustment screen (Fig. 10A) has been operated. When CPU 31 determines that keep button 104 has been operated, in Step S11, it adds a photographed image selected for keeping to the keep images.

In Step S12, CPU 31 queries display processor 37 and determines whether or not the remaining number [of shots] capable of being taken is 0 (whether or not four kinds of keep images have been selected). When CPU 31 determines that the remaining number [of shots] capable of being taken is not 0 (that photographing is still possible), processing returns to Step S4, and the execution of processing subsequent thereto is repeated.

When CPU 31 determines in Step S12 that the remaining number [of shots] capable of being taken is 0, when it is once again determined that keep button 104 was not operated in Step S10, it proceeds to the processing of Step S13.

In Step S13, based on a notification from touch panel 38-2, CPU 31 determines whether or not end-photographing button 111 (Fig. 10B) displayed on operating panel 13-2 has been operated. When CPU 31 determines that end-photographing button 111 has not been operated, it returns to the processing of Step S8, and continues the display of the brightness adjustment screen.

In Step S13, when CPU 31 determines that end-photographing button 111 has been operated, it proceeds to the processing of Step S14. Further, when CPU 31 determines via the processing of Step S12 that the number of possible [shots] remaining is 0, since a user is only capable of operating end-photographing button 111, processing proceeds to Step S14 in this case, too.

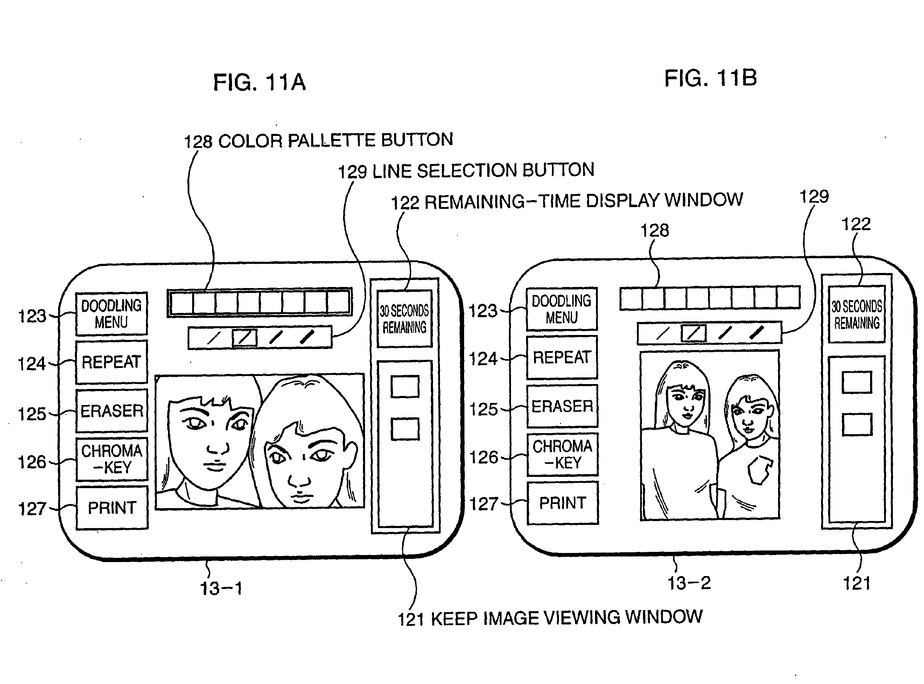

In Step S14, based on a command from CPU 31, display processor 37 displays a doodling screen on operating panel 13. A doodling screen is displayed as shown in Fig. 11A and Fig. 11B, for example. In the examples of Figs. 11A and 11B, different keep images for doodling are selected in operating panel 13-1 and operating panel 13-2. A user can change a keep image to be doodled by using touch pen 14 to select a predetermined keep image from among the keep images displayed in a keep image viewing window 121 on the right side of operating panel 13.

On the left side of operating panel 13, there are displayed a doodling menu button 123 operated when displaying various doodling tools; a repeat button 124 operated when repeating an executed process once again; an eraser button 125 operated when deleting a doodle; a chroma-key button 126 operated when selecting an area within which doodling is possible, which will be explained in detail hereinbelow; and a print button 127 operated when ending doodling and starting printing. Further, on the top side of the screen, there are displayed a color palette button 128 operated when selecting a color for characters and markings being doodled; and a line selection button 129 operated when setting the thickness of a line being doodled. Further, a time limit is set on doodling, and when CPU 31 recognizes that the time limit has elapsed, it compulsorily displays the next screen. The time limit is displayed in a remaining-time displaying window 122.

Furthermore, doodling comprises a reflecting process in which doodling inputted via one of operating panel 13-1 and 13-2 is reflected in the processing of the other one, and a process for limiting a doodling-enabled area, and these processes will be described hereinbelow.

In the doodling of Step S14, when CPU 31 determines either that print button 127 has been operated, or that the time limit has elapsed, processing proceeds to Step S15.

In Step S15, based on a command from CPU 31, display processor 37 displays a screen for selecting the number of partitions [per sheet] on operating panel 13. On operating panel 13-1 and operating panel 13-2, for example, partitioning selection screens of "7 x 4", "Combination of 2 x 2 in upper half and 3 x 4 in lower half", "4 x 2", and "2 x 2" are displayed as shown in Fig. 12A and Fig. 12B. A user can use a touch pen 14 to select a sheet of the desired number of partitions (print sizes). CPU 31, based on a notification from touch panel 38, specifies a sheet (either a photographic sheet or a sticker sheet) for printing to printer 36.

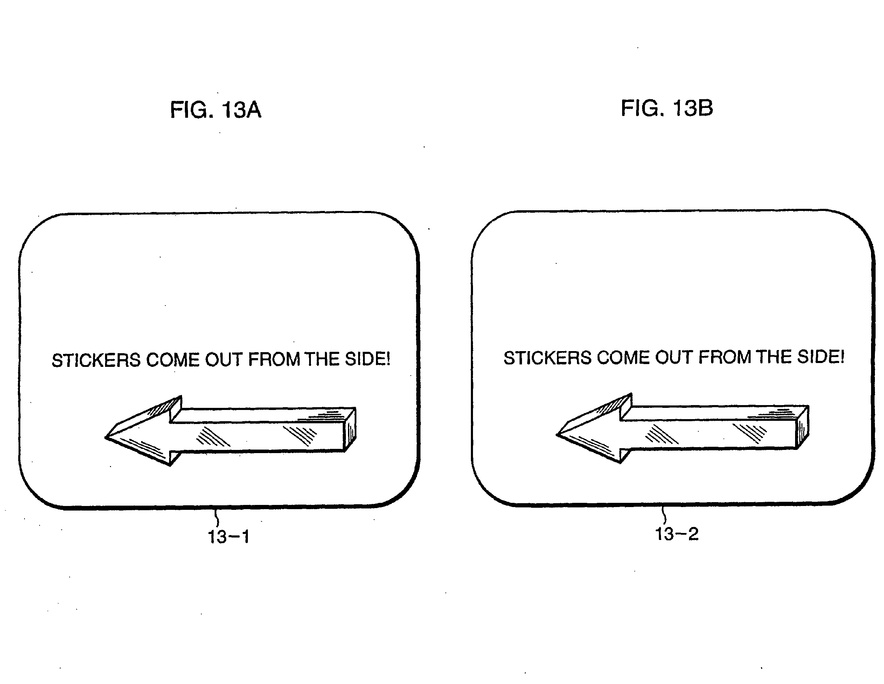

In Step S16, based on a command from CPU 31, display processor 37 displays a guidance screen indicating that a printed sheet will be ejected from the side [of image printing apparatus 1] on operating panel 13-1 and operating panel 13-2 as shown in Fig. 13A and Fig. 13B, for example. Thereafter, processing returns to Step S1.

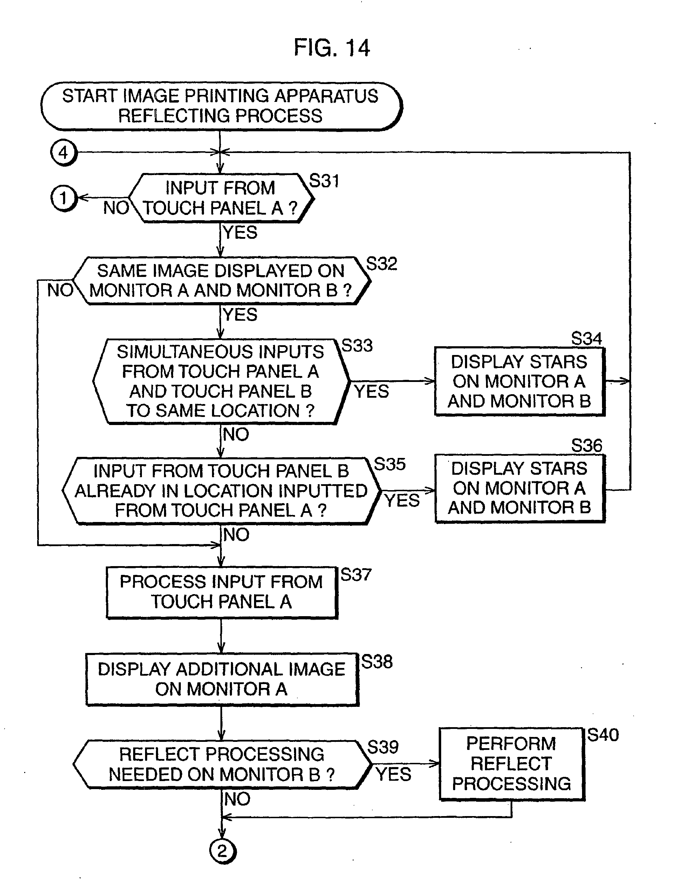

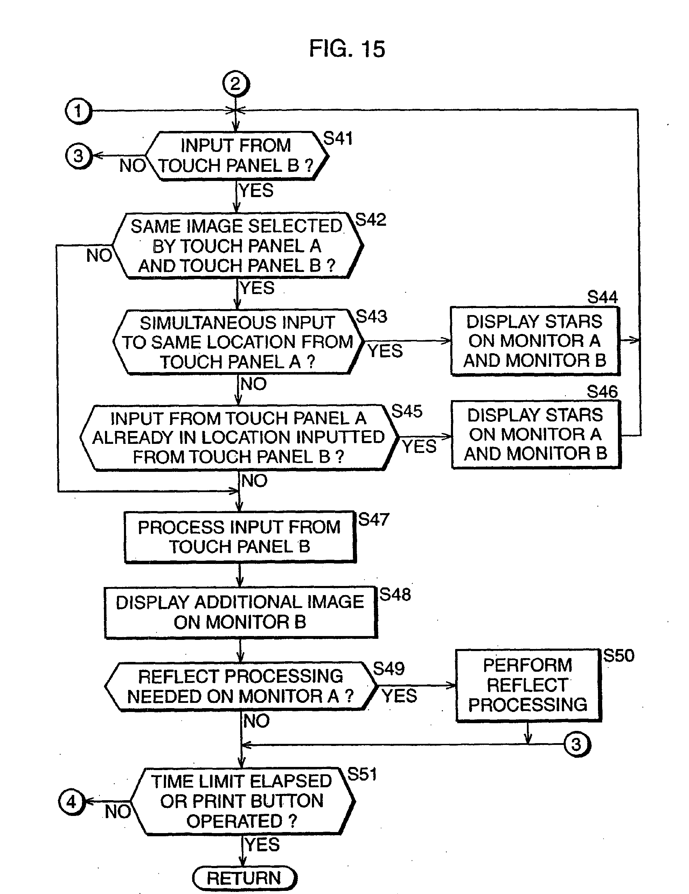

Since two operating panels 13 are provided in image printing apparatus 1, two users can share the inputting of image editing. Thus, for example, on the doodling screen displayed in the processing of Step S14 of Fig. 4, a plurality of users can simultaneously input additional images relative to one image. Next, a reflecting process, which either reflects a doodle inputted from touch panel 38-1 (hereinafter also referred to as touch panel A) as a doodle inputted from touch panel 38-2 (hereinafter also referred to as touch panel B), or reflects a doodle inputted from touch panel 38-2 as a doodle inputted from touch panel 38-1, will be explained by referring to the flowchart of Fig. 14 and Fig. 15.

In Step S31, CPU 31 determines whether or not a doodle has been inputted from touch panel A. When a user inputs a doodle using touch pen 14-1, CPU 31 determines that a doodle has been inputted and proceeds to the processing of Step S32.

In Step S32, CPU 31 determines whether or not the same keep image is displayed on monitor 39-1 (hereinafter also referred to as monitor A) and monitor 39-2 (hereinafter also referred to as monitor B) as the image to be edited. When the user of operating panel 13-1 and the user of operating panel 13-2 have selected the same keep image as the image to be edited, CPU 31 recognizes that the same keep image is being displayed on monitor A and monitor B, and proceeds to the processing of Step S33.

In Step S33, CPU 31 determines whether or not a doodle inputted from touch panel A and a doodle inputted from touch panel B have been simultaneously inputted to the same location as an image stored in the second regions of the frame buffers of display processor 37-1 (hereinafter also referred to as display processor A) and display processor 37-2 (hereinafter also referred to as display processor B). When CPU 31 determines that a doodle inputted from touch panel A and a doodle inputted from touch panel B have been simultaneously inputted to the same location, it proceeds to the processing of Step S34.

In Step S34, based on a command from CPU 31, display processor A displays a graphic symbol of one large star on monitor A in the same location as the location in which a doodle was inputted from touch panel A. Further, based on a command from CPU 31, display processor B displays a graphic symbol of one large star on monitor B in the same location as the location in which a doodle was inputted from touch panel B.

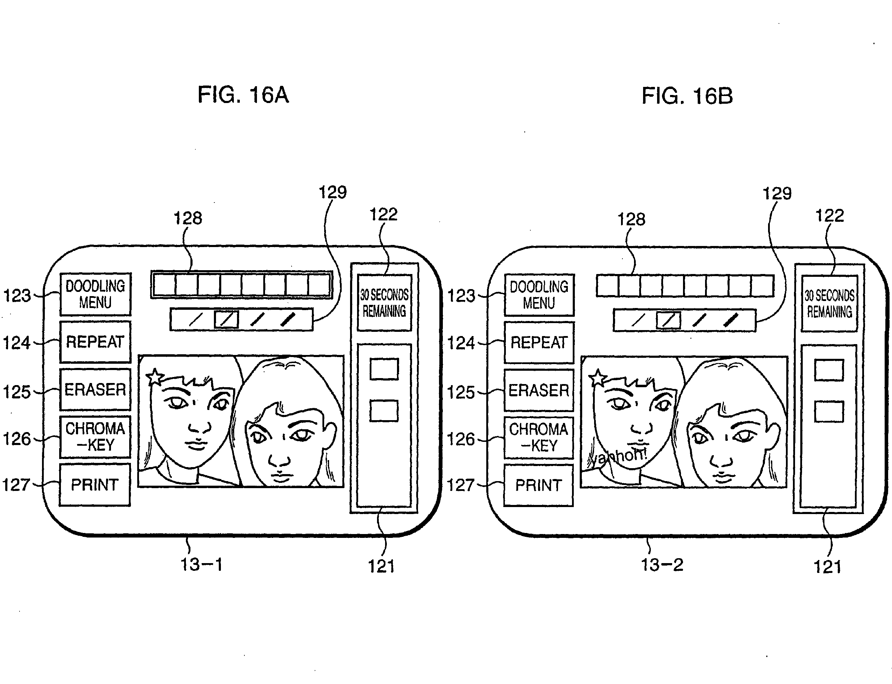

Figs. 16A and 16B show examples of operating panel 13 displays in which doodling screens are displayed in the processing of Step S34. Fig. 16A shows a display of operating panel 13-1, and Fig. 16B shows a display of operating panel 13-2, respectively. In these examples, graphic symbols of stars indicating that additional images were simultaneously inputted from touch panel A and touch panel B are displayed in the upper left of the keep image.

In Step S34, after displaying the graphic symbols of the stars, CPU 31 returns to the processing of Step S31.

Conversely, in Step S33, when CPU 31 determines that a doodle inputted from touch panel A and a doodle inputted from touch panel B have not been simultaneously inputted to the same location as image data stored in the second regions of the frame buffers of display processor A and display processor B, it proceeds to the processing of Step S35.

In Step S35, CPU 31 determines whether or not the location in which a doodle is inputted from touch panel A is the location in which a doodle is being inputted from touch panel B by confirming the storage state of the second region of the frame buffer of display processor B. When CPU 31 determines that a doodle from touch panel B is already inputted in a location in which a doodle from touch panel A is inputted, it proceeds to the processing of Step S36.

In Step S36, based on a command from CPU 31, display processor A displays graphic symbols of eight small stars on monitor A in the same locations as the locations in which additional images from touch panel A have been inputted. Further, display processor B displays graphic symbols of eight small stars on monitor B in the same locations as display processor A.

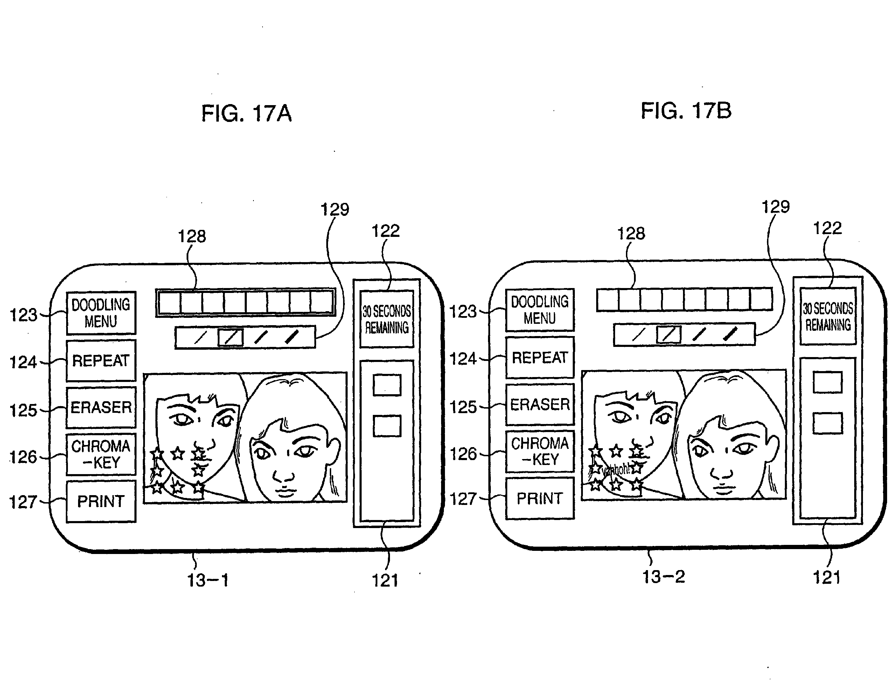

Figs. 17A and 17B show examples of operating panel 13 displays in which doodling screens are displayed in the processing of Step S36. Fig. 17A shows a display of operating panel 13-1, and Fig. 17B shows a display of operating panel 13-2, respectively. In these examples, additional images have been inputted, via touch panel A, at the bottom left of a keep image, but, as shown in Fig. 17B, since the doodle "yahhoh!" has already been inputted in this location, the graphic symbols of eight small stars are displayed as shown in Fig. 17A.

As shown in Figs. 16A, 16B, 17A and 17B, by displaying a graphic symbol (graphic symbols of eight small stars), which a user did not intend (did not input), there is a heightened sense of [doodling being] a game, and users can have fun while inputting additional images. Furthermore, the symbols displayed are not limited to stars. Further, [the present invention] can also be constituted such that sound effects are outputted from speaker 11 at the same time a star is displayed.

In Step S36, after the stars have been displayed, CPU 31 returns to the processing of Step S31.

Conversely, in Step S35, when CPU 31 determines that a doodle from touch panel B has not been inputted to the location in which a doodle from touch panel A is inputted, it proceeds to the processing of Step S37. Further, in Step S32, when CPU 31 determines that the same keep image is not displayed on monitor A and monitor B as the image to be edited, it proceeds to the processing of Step S37.

In Step S37, based on a command from CPU 31, display processor A processes a doodle inputted from touch panel A. That is, it stores a doodle inputted from touch panel A in the second region of the frame buffer.

In Step S38, based on a command from CPU 31, display processor A displays on monitor A the keep image (image on which doodling was performed) stored in the second region of the frame buffer by the processing of Step S37.

In Step S39, CPU 31 determines whether or not it is necessary to reflect (display) a doodle, which was inputted from touch panel A and displayed on monitor A by the processing of Step S38, on monitor B as well. That is, when the same image as the keep image to be edited is selected on monitor A and monitor B, CPU 31 determines that it is necessary to reflect and display input from touch panel A on monitor B, too, and proceeds to the processing of Step S40.

In Step S40, based on a command from CPU 31, display processor B stores doodle data, which has been stored in the second region of the frame buffer of display processor A by the processing of Step S37, to the second region of its own frame buffer, and displays the stored image data on monitor B. Thereafter, processing proceeds to Step S41.

In Step S39, when CPU 31 determines that it is not necessary to reflect (display) a doodle inputted from touch panel A on monitor B as well, it proceeds to the processing of Step S41. Further, in Step S31, when CPU 31 determines that a doodle has not been inputted from touch panel A, it proceeds to the processing of Step S41.

The processing of Step S41 through Step S50 is processing for reflecting from touch panel B to touch panel A, which is performed the same as the processing of Step S31 through Step S40, which is a reflecting process performed from touch panel A to touch panel B. That is, when the same keep image is selected as the image to be doodled on touch panel A and touch panel B, and the same doodling is simultaneously inputted, one large star is displayed the same as the processing of Step S34, and when a doodle from touch panel A is already inputted in a location, where a doodle from touch panel B has been inputted, eight small stars are displayed the same as the processing of Step S36. Furthermore, when CPU 31 determines that it is necessary to reflect and display on monitor A a doodle, which was inputted from touch panel B and is displayed on monitor B, a reflection processing is carried out the same as the processing of Step S40.

[CPU 31] proceeds to the processing of Step S51 when, in Step S41, it is determined that a doodle has not been inputted from touch panel B, and when, in Step S49, it is determined that a doodle inputted from touch panel B need not be reflected on monitor A, and when the processing of Step S50 ends.

In Step S51, CPU 31 either determines whether or not the time limit for doodling has elapsed, or determines whether or not print button 127 (Figs. 17A and 17B) has been operated. When CPU 31 determines that the time limit for doodling has not elapsed, and the print button 127 has not been operated, it returns to the processing of Step S31, and executes the processing subsequent thereto over again.

In Step S51, when CPU 31 determines either that the time limit for doodling has elapsed, or that print button 127 has been operated, it terminates the processing of the flowchart of Fig. 14 and Fig. 15, and returns to the processing of Step S15 of Fig. 4.

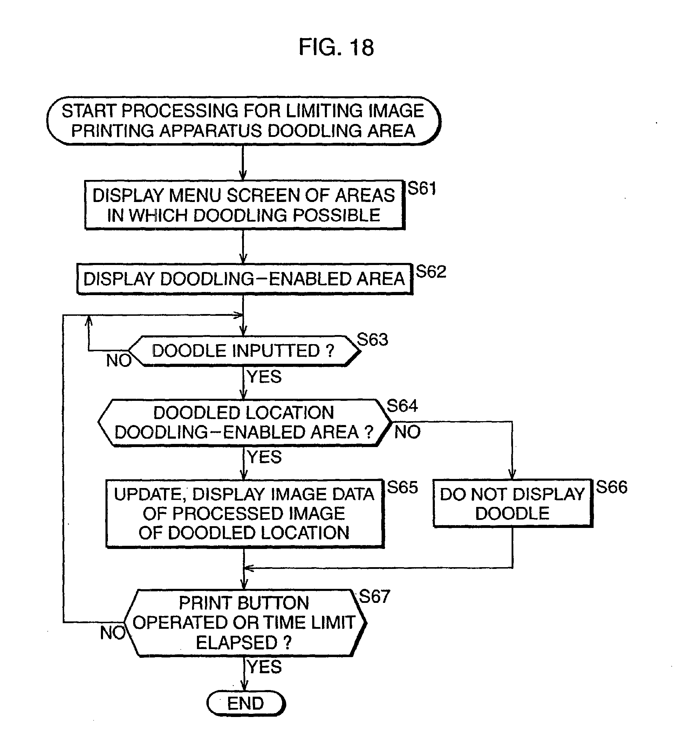

In an image printing apparatus 1 to which the present invention has been applied, when inputting a doodle, a user can set [the image printing apparatus] so as not to doodle on his face by limiting the doodling-enabled area beforehand. Next, processing for limiting the doodling area will be explained by referring to the flowchart of Fig. 18. When chroma-key button 126 is operated on the doodling screen shown in Figs. 11A and 11B, the processing of the flowchart of Fig. 18 commences.

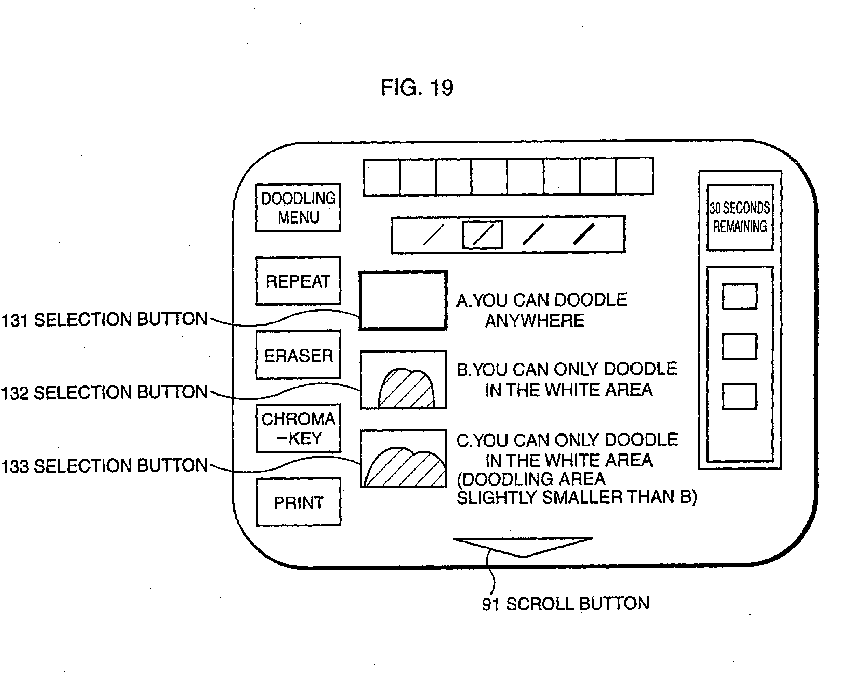

In Step S61, in accordance with chroma-key button 126 being operated, CPU 31 displays a menu screen of areas where doodling is possible. Fig. 19 shows the thus-displayed menu screen of areas where doodling is possible. In Fig. 19, there are displayed three types [of selection buttons], selection button 131, selection button 132, and selection button 133, which are operated when selecting an area where doodling is possible. Examples of the areas within which doodling is possible, and the areas within which [doodling] is not possible are displayed in selection button 131, selection button 132 and selection button 133, respectively, and the area within which doodling is possible is displayed in white, and the area within which doodling is not possible is displayed as diagonal lines. A user selects a predetermined selection button with a touch pen 14. Furthermore, a user can display other selection buttons by operating scroll button 92 displayed at the bottom of the screen.

Selection button 131 is operated when making it possible to doodle anywhere on a keep image selected for doodling. On the right side of selection button 131, the message "You can doodle anywhere" is displayed. Selection button 132 is operated when making it possible to doodle within a relatively wide area of outside a diagonal lined portion (the white area) within a keep image selected for doodling. On the right side of selection button 132, the message "You can only doodle in the white area" is displayed. Selection button 133 is operated when making it possible to doodle within a relatively narrow area of outside a diagonal lined portion (the white area) within a keep image selected for doodling. On the right side of selection button 133, the message "You can only doodle in the white area (The doodling area is slightly smaller than in B)" is displayed. Therebelow, omitted from the figure, an additional three selection buttons 134, 135, 136 besides selection buttons 131, 132, 133 are provided, and can be displayed by operating scroll button 91.

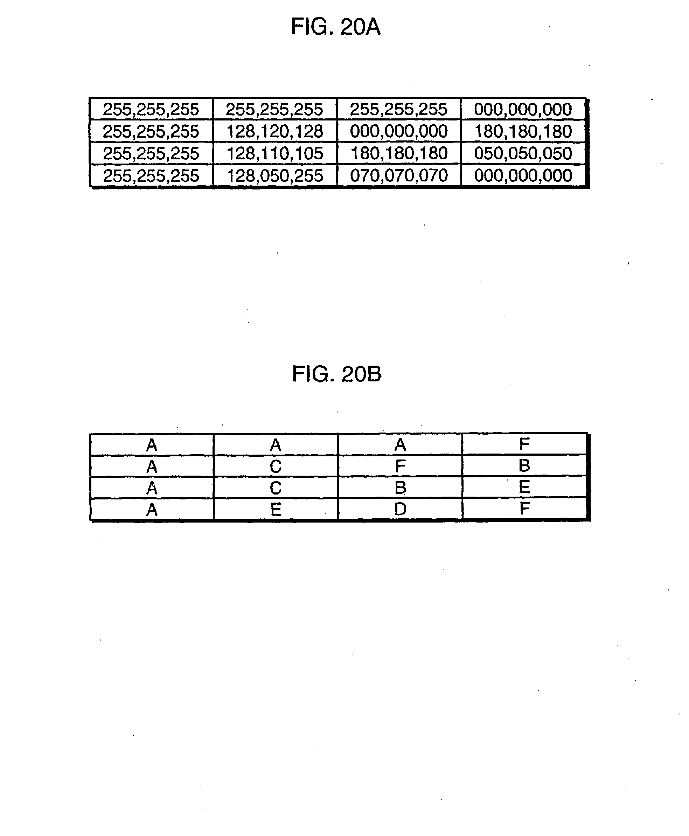

Figs. 20A and 20B are diagrams showing an example of settings for a doodling-enabled area. Fig. 20A shows R, G, B pixel values, which are stored in a first storage area of the frame buffer of display processor 37. Furthermore, a pixel value constitutes any value from 000 to 255. In this example, the dark area (area in which all R, G, B pixel values are smaller than threshold values) is regarded as doodling-enabled. As these threshold values, the values of 255 (A), 180 (B), 128 (C), 70 (D), 50 (E), 0 (F) are set corresponding to selection buttons 131 through 136.

A threshold value is set for each screen (area), and is not set for each pixel, and for the sake of expediting the explanation, it is supposed that a threshold value of A through F is applied as shown in Fig. 20B for each pixel having the R, G, B values shown in Fig. 20A. When threshold value A is applied, since all pixels are either equivalent to threshold value A, or darker than this, doodling becomes possible in all pixels (areas). By contrast, when threshold value F is applied, since all pixels are either equivalent to threshold value F, or brighter than this, doodling is substantially impossible in all pixels (areas).

In the examples of Figs. 20A and 20B, for pixels for which threshold values B (180), D (70), E (50) are set, since all R, G, B pixel values are either (180, 180, 180), (070, 070, 070) or (050, 050, 050) and are equivalent to the threshold value (since they are not smaller than the threshold value), doodling is not possible. For pixels for which threshold value C (128) is set as well, R, G, B pixel values are either (128, 120, 128) or (128, 050, 255), and the pixel value of both G, B are smaller than threshold value C, but the pixel value of R is equivalent to the threshold value, and since not all of the pixel values of R, G, B are smaller than the threshold value, doodling is not possible. If the decision criteria is that doodling is possible when all the pixel values of R, G, B are either equivalent to the threshold value, or smaller than the threshold value, the above pixels for which threshold values B (180), D (70), E (50) are set, as shown in Figs.20A and 20B, are all doodling-enabled.

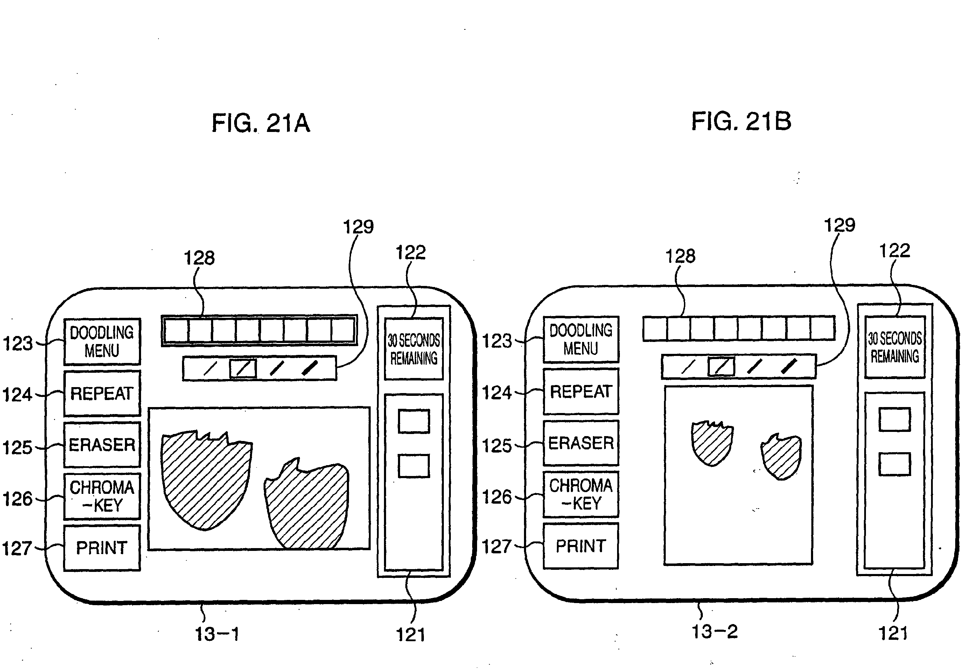

In Step S62, based on a command from CPU 31, display processor 37 displays the doodling-enabled area by superimposing it on a keep image for doodling displayed on monitor 39. Figs. 21A and 21B show examples of monitor 39 displays on which display processor 37 has displayed doodling-enabled areas. In Figs. 21A and 21B, the target of doodling is the keep image shown in Figs. 11A and 11B, and the areas within which doodling is not possible (areas corresponding to the users' faces) are shown as diagonal line portions, and parts other than these are regarded as doodling-enabled areas.

Since a curtain is normally arranged behind a user in the space photographed by CCD camera 15, the user's face becomes the brightest, and the periphery thereof becomes dark. Accordingly, as described hereinabove, by making it possible to doodle in an area that is darker than a predetermined threshold value, inadvertent doodling on the face of a user can be controlled. This kind of control is not possible if doodling is enabled in an area that is brighter than a predetermined threshold value.

In Step S63, based on a notification from touch panel 38, CPU 31 determines whether or not a doodle has been inputted. CPU 31 waits until a doodle input determination is made, and when it determines that a doodle has been inputted, it proceeds to the processing of Step S64.

In Step S64, CPU 31 determines whether or not a location in which a doodle has been inputted is a doodle-enabled area (if it is an area in which the pixel value is either equivalent to a selected threshold value, or smaller than this [selected threshold value]) by comparing each pixel value stored in the first region of the frame buffer of display processor 37, with threshold value. When CPU 31 has determined that it is a doodle-enabled area, it proceeds to the processing of Step S65.

In Step S65, CPU 31 updates image data in the second region of the frame buffer, corresponding to the location in which a doodle has been inputted, with data of an inputted doodle, and displays [same] on monitor 39.

Conversely, in Step S64, when CPU 31 determines that the location in which a doodle has been inputted is an area in which doodling is prohibited (the value of the pixel values is larger than the threshold value), it proceeds to the processing of Step S66.

In Step S66, based on a command from CPU 31, display processor 37 does not display an inputted doodle. That is, it retains the data as-is without updating the image data in the second region of the frame buffer.

In Step S67, CPU 31 determines either whether or not the time limit for doodling has elapsed, or whether or not print button 127 has been operated. When CPU 31 determines that the time limit for doodling has not elapsed yet, and that print button 127 has not been operated, it returns to the processing of Step S63, and executes the processing subsequent thereto over again.

In Step S67, when CPU 31 has determined either that the time limit for doodling has elapsed, or that print button 127 has been operated, it ends processing.

A doodling-enabled area specified from one of operating panel 13-1 and operating panel 13-2 can also be reflected on the other one. However, when, by doing so, different images are displayed on the one side and the other side, there is the danger that the doodling of the one side will infringe on the face of the image of the other side. Accordingly, when different images are displayed on the one side and the other side, at the least it is desirable to prohibit the reflecting of the doodling-enabled area of the one side to the other side.

Furthermore, the processing shown in the flowchart of Fig. 18 can also be applied to an image printing apparatus in which only one operating panel is provided.

Hereinabove, an image printing apparatus provided with two operating panels 13 was explained, but, within the range of possibilities of the installation site, the operating panels 13 can also be increased to more than two.

Furthermore, it was supposed that one touch pen 14 was provided for each operating panel 13, but to the extent CPU 31 can perform the processing, a plurality of touch pens 14 can be provided for one operating panel 13.

### INDUSTRIAL APPLICABILITY

According to a first image printing apparatus of the present invention, because a plurality of display screens are provided, editorial input can be inputted quickly and efficiently.

According to a printing medium preparation system of the present invention, it is possible to prepare a printing medium, for which photographing and editing are performed by an image printing apparatus equipped with a plurality of display screens.

According to a second image printing apparatus of the present invention, when inputting a doodle to a photographed image, for example, it is possible to prevent the doodle from overlapping onto the face of the object.

## Claims

1. An image printing apparatus, comprising:
photographing means for photographing an object;
first displaying means for displaying an image of said object photographed by said photographing means;
accepting means for accepting editorial input inputted to said image displayed by said first displaying means;
editing means for editing said image based on said editorial input accepted by said accepting means; and
printing means for printing said image edited by said editing means,
**characterized in that** said first displaying means is constituted by a plurality of display screens, and
a plurality of said accepting means are provided corresponding to said plurality of display screens, respectively.

2. The image printing apparatus according to Claim 1, **characterized in that** said plurality of display screens are juxtaposed.

3. The image printing apparatus according to Claim 1, **characterized in that** different types of information are displayed on said plurality of display screens, respectively.

4. The image printing apparatus according to Claim 1, **characterized in that** a display for specifying said editorial input is displayed on each of said plurality of display screens, and
said accepting means, of which a plurality are provided, accept each said editorial input based on the display for specifying said editorial input.

5. The image printing apparatus according to Claim 1, **characterized in that** a selection screen of said image is displayed on a first display screen, and said image selected on said selection screen is displayed on a second display screen of said plurality of display screens.

6. The image printing apparatus according to Claim 1, further comprising reflecting means for reflecting a first editorial input accepted by one of said plurality of accepting means as a second editorial input accepted by the other accepting means, when said image displayed on a first display screen and said image displayed on a second display screen of said plurality of display screens are the same image.

7. The image printing apparatus according to Claim 1, **characterized in that** said editing means edits a special image when said image displayed on a first display screen and said image displayed on a second display screen of said plurality of display screens are the same, and one of said accepting means and the other of said accepting means simultaneously accept said editorial inputs in a location corresponding to said image.

8. The image printing apparatus according to Claim 1, **characterized in that** said editing means edits a special image when said image displayed on a first display screen and said image displayed on a second display screen of said plurality of display screens are the same, and one of said accepting means accepts said editorial input in a location corresponding to a location in which editorial input has already been accepted from the other accepting means.

9. The image printing apparatus according to Claim 1, further comprising:
first storage means for storing said image displayed on a first display screen of said plurality of display screens; and
second storage means for storing said image displayed on a second display screen of said plurality of display screens.

10. The image printing apparatus according to Claim 9, **characterized in that** said printing means prints an image stored by either said first or second storage means on a printing medium.

11. The image printing apparatus according to Claim 1, further comprising:
first sound generating means for generating a sound corresponding to a display of a first display screen of said plurality of display screens; and
second sound generating means for generating a sound corresponding to a display of a second display screen of said plurality of display screens, and
**characterized in that** said first sound generating means and said second sound generating means generate respectively different sounds.

12. The image printing apparatus according to Claim 1, further comprising second displaying means for displaying said object image photographed by said photographing means in the vicinity of said photographing means.

13. The image printing apparatus according to Claim 1, further comprising stairs consisting of one or more steps of substantially the same width as said printing image apparatus, and positioned in a range where said photographing means is capable of photographing.

14. An image printing method comprising:
a photographing step for photographing an object;
a displaying step for displaying an image of said object photographed by the processing of said photographing step;
an accepting step for accepting editorial input inputted relative to said image displayed by the processing of said displaying step;
an editing step for editing said image based on said editorial input accepted by the processing of said accepting step; and
a printing step for printing said image edited by the processing of said editing step,
**characterized in that** the display by the processing of said displaying step is carried out on a plurality of display screens, and the acceptance by the processing of said accepting step is executed corresponding to said plurality of display screens, respectively.

15. A printing medium generated by an image printing method comprising:
a photographing step for photographing an object;
a displaying step for displaying an image of said object photographed by the processing of said photographing step;
an accepting step for accepting editorial input inputted relative to said image displayed by the processing of said displaying step;
an editing step for editing said image based on said editorial input accepted by the processing of said accepting step; and
a printing step for printing said image edited by the processing of said editing step,
**characterized in that** the display by the processing of said displaying step is carried out on a plurality of display screens, and the acceptance by the processing of said accepting step is executed corresponding to said plurality of display screens, respectively.

16. A computer program comprising:
a photographing controlling step for controlling the photographing of an object;
a display controlling step for controlling the display of an image of said object, the photographing of which is controlled by the processing of said photographing controlling step;
an acceptance controlling step for controlling the acceptance of editorial input inputted relative to said image, the display of which is controlled by the processing of said display controlling step;
an editing step for editing said image based on said editorial input, the acceptance of which is controlled by the processing of said acceptance controlling step; and
a print controlling step for controlling the printing of said image edited by the processing of said editing step,
**characterized in that**, in the processing of said display controlling step, the display of an image of said object on a plurality of display screens is controlled, and the acceptance by the processing of said accepting step is executed corresponding to said plurality of display screens, respectively.

17. A printing medium preparation system, comprising:
photographing means for photographing an object;
displaying means for displaying on a plurality of display screens an image of said object photographed by said photographing means;
accepting means for accepting editorial input inputted relative to said image displayed on said plurality of display screens, respectively, by said displaying means;
editing means for editing said image displayed on said plurality of display screens, based on said editorial input accepted by said accepting means;
printing means for printing on a predetermined printing medium said image displayed on said plurality of display screens edited by said editing means; and
ejection means for ejecting said printing medium on which said image displayed on said plurality of display screens has been printed by said printing means.

18. A printing medium preparation method comprising:
a photographing step for photographing an object;
a displaying step for displaying on a plurality of display screens an image of said object photographed by the processing of said photographing step;
an accepting step for accepting editorial input inputted relative to said image displayed on said plurality of display screens, respectively, by the processing of said displaying step;
an editing step for editing said image displayed on said plurality of display screens, based on said editorial input accepted by the processing of said accepting step;
a printing step for printing on a predetermined printing medium said image displayed on said plurality of display screens edited by the processing of said editing step; and
an ejecting step for ejecting said printing medium on which said image displayed on said plurality of display screens has been printed by the processing of said printing step.

19. A program for having a computer to execute:
a photographing controlling step for controlling the photographing of an object;
a display controlling step for controlling the display on a plurality of display screens of an image of said object, the photographing of which is controlled by the processing of said photographing controlling step;
an accepting step for accepting editorial input inputted relative to said image, the displaying of which on said plurality of display screens, respectively, is controlled by the processing of said display controlling step;
an editing step for editing said image displayed on said plurality of display screens, based on said editorial input accepted by the processing of said accepting step;
a print controlling step for controlling the printing on a predetermined printing medium of said image displayed on said plurality of display screens edited by the processing of said editing step; and
an ejection controlling step for controlling the ejection of said printing medium on which the printing of said image displayed on said plurality of display screens is controlled by the processing of said print controlling step.

20. An image printing apparatus, comprising:
photographing means for photographing an object;
displaying means for displaying an image of said object photographed by said photographing means;
accepting means for accepting editorial input inputted relative to said image displayed by said displaying means;
editing means for editing said image based on said editorial input accepted by said accepting means;
printing means for printing said image edited by said editing means;
setting means for setting the editable area of said image to be edited by said editing means; and
determining means for determining whether or not editorial input has been inputted in the editable area of said image,
**characterized in that** said editing means edits said image based on said editorial input when it has been determined by said determining means that said editorial input has been inputted in said editable area.

21. The image printing apparatus according to Claim 20, **characterized in that** said setting means sets as said editable area an area, in which the value of pixels constituting said image correspond to pixels, which are darker than a predetermined threshold value set beforehand.

22. The image printing apparatus according to Claim 20, **characterized in that** said displaying means has a plurality of display screens, and said accepting means has:
a first accepting means corresponding to a first display screen of said plurality of display screens; and
a second accepting means corresponding to a second display screen of said plurality of display screens; and
said setting means has:
a first setting means for setting a first said editable area corresponding to said first display screen; and
a second setting means for setting a second said editable area corresponding to said second display screen.

23. The image printing apparatus according to Claim 22, further comprising a plurality of selecting means for selecting the percentage of said editable area for each of said plurality of display screens.

24. The image printing apparatus according to Claim 22, **characterized in that** first said editable area set by said first setting means is displayed on said first display screen, and second said editable area set by said second setting means is displayed on said second display screen.

25. The image printing apparatus according to Claim 22, further comprising reflecting means for reflecting editorial input by said first accepting means on said second display screen, and for reflecting editorial input by said second accepting means on said first display screen, when said image displayed on said first display screen is the same as the image displayed on the second display screen.

26. The image printing apparatus according to Claim 25, **characterized in that** at the least when said image displayed on said first display screen is the same as the image displayed on the second display screen, said reflecting means prohibits first said editable area from being reflected on said second display screen, and prohibits second said editable area from being reflected on said first display screen.

27. An image printing method comprising:
a photographing step for photographing an object;
a displaying step for displaying an image of said object photographed by the processing of said photographing step;
an accepting step for accepting editorial input inputted relative to said image displayed by the processing of said displaying step;
an editing step for editing said image based on said editorial input accepted by the processing of said accepting step;
a printing step for printing said image edited by the processing of said editing step;
a setting step for setting an editable area for said image edited by the processing of said editing step; and
a determining step for determining whether or not editorial input has been inputted in said editable area of said image,
**characterized in that**, in the processing of said editing step, said image is edited based on said editorial input, when it has been determined by the processing of said determining step that said editorial input has been inputted in said editable area.

28. A computer program comprising:
a photographing controlling step for controlling the photographing of an object;
a display controlling step for controlling the display of an image of said object, the photographing of which is controlled by the processing of said photographing controlling step;
an accepting step for accepting editorial input inputted relative to said image, the display of which is controlled by the processing of said display controlling step;
an editing step for editing said image based on said editorial input accepted by the processing of said accepting step;
a print controlling step for controlling the printing of said image edited by the processing of said editing step;
a setting step for setting an editable area for said image edited by said editing step; and
a determining step for determining whether or not editorial input has been inputted in said editable area of said image,
**characterized in that**, in the processing of said editing step, said image is edited based on said editorial input, when it has been determined by the processing of said determining step that said editorial input has been inputted in said editable area.
